# EUROPEAN PATENT SPECIFICATION

(11) **EP 4 648 264 B1**
(45) Date of publication and mention of the grant of the patent: **08.07.2026**
(21) Application number: 25160784.2
(22) Date of filing: 28.02.2025
(51) Int. Cl.: H02K 7/14, H02K 11/33, H02K 11/02

(54) **POWER TOOL**
ELEKTROWERKZEUG
OUTIL ÉLECTRIQUE

(30) Priority: 09.05.2024 CN 202421000924 U; 09.05.2024 CN 202410574161; 01.11.2024 CN 202422668576 U
(43) Date of publication of application: 12.11.2025
(73) Proprietor: Nanjing Chervon Industry Co., Ltd., Nanjing, Jiangsu 211106 (CN)
(72) Inventor: XIAN, Chao, Nanjing (CN); LI, Qingqiao, Nanjing (CN); XUE, Jingkun, Nanjing (CN); ZHANG, Qi, Nanjing (CN)
(74) Representative: Sun, Yiming

(56) References cited:
- CN-U- 203 243 187
- DE-A1- 102021 104 368
- US-A1- 2021 328 482

## Description

### TECHNICAL FIELD

The present application relates to the technical field of tools and, in particular, to a power tool and a garden tool.

### BACKGROUND

Power tools are more environmentally friendly than engine-powered tools and thus are widely applied. A power tool is generally driven to work by an electric motor. The power tool is provided with a circuit board for controlling the electric motor, multiple semiconductor switches are disposed on the circuit board, and the electric motor is electrically connected to the circuit board through a motor line.

During operation of the electric motor, some radiated interference is generated. In the related art, the electric motor is generally grounded by using an external magnetic ring or capacitor to reduce the radiated interference. However, the external magnetic ring or capacitor needs to occupy space in the power tool and results in a certain cost. Document US 2021/328482 A1 discloses a related power tool.

This part provides background information related to the present application, and the background information is not necessarily the existing art.

### SUMMARY

An object of the present application is to solve or at least alleviate part or all of the preceding problems. Therefore, an object of the present application is to provide a power tool and a garden tool where radiated interference of an electric motor is made relatively small at a low cost and without occupying space inside the power tool and the garden tool.

To achieve the preceding object, the present application adopts the technical solutions below.

A power tool according to the invention includes a housing; an energy storage device configured to supply power to the power tool; an electric motor disposed in the housing and including a stator assembly and a rotor assembly; a driver board including a circuit layer, an insulating layer, and a metal base layer, where multiple semiconductor switches are disposed on the circuit layer, and a driver circuit formed by the multiple semiconductor switches is electrically connected to the energy storage device; and a controller configured to control the multiple semiconductor switches to be turned on and off to adjust power supply from the energy storage device to the electric motor; where the stator assembly is directly connected to the metal base layer by a wire.

In some examples, the metal base layer is made of aluminum.

In some examples, the stator assembly is not connected to the metal base layer via a noise suppression device.

In some examples, two ends of the wire are directly connected to the stator assembly and the metal base layer respectively to reduce radiated interference of the electric motor.

In some examples, the electric motor is an inrunner, and the wire is connected to a stator core of the stator assembly.

In some examples, the electric motor is an outrunner, and the wire is connected to a stator cap of the stator assembly.

In some examples, the power tool is a wheeled garden tool.

In some examples, the diameter of the electric motor is greater than or equal to 60 mm.

In some examples, the rated rotational speed of the electric motor is greater than or equal to 2000 rpm.

In some examples, the voltage of the energy storage device is greater than or equal to 18 V.

In some examples, the multiple semiconductor switches are in a transistor outline leadless (TOLL) package.

In some examples, the length and the width of a single semiconductor switch of the multiple semiconductor switches are both greater than or equal to 9 mm.

In some examples, the thickness of a single semiconductor switch of the multiple semiconductor switches is less than or equal to 3 mm.

In some examples, the power tool further includes a metal heat sink connected to the metal base layer.

In some examples, a thermally conductive layer is disposed between the metal heat sink and the metal base layer.

In some examples not belonging to the invention, a garden tool includes a housing including a metal component; an energy storage device configured to supply power to the garden tool; an electric motor disposed in the housing and including a stator assembly and a rotor assembly; a driver board provided with multiple semiconductor switches, where a driver circuit formed by the multiple semiconductor switches is electrically connected to the energy storage device; a heat sink made of a metal material and connected to the driver board; and a controller configured to control the multiple semiconductor switches to be turned on and off to adjust power supply from the energy storage device to the electric motor; where the stator assembly is connected to the driver board or the housing or the heat sink by a wire without using a noise suppression device.

In some examples not belonging to the invention, a power tool includes a housing; a power supply device configured to supply power to the power tool; an electric motor disposed in the housing and including a stator assembly and a rotor assembly, where the rotor assembly includes a rotor shaft; a reduction device disposed in the housing and connected to the electric motor; and a metal component disposed on the housing and/or inside the housing. The power tool further includes a connector, one end of the connector is connected to the electric motor, and the other end of the connector is connected to the metal component. The reduction device forms a first projection on a plane parallel to the rotor shaft, the connector forms a second projection on the plane, and the first projection at least partially overlaps the second projection.

In some examples not belonging to the invention, a garden tool includes a housing; a power supply device configured to supply power to the power tool; an electric motor disposed in the housing and including a stator assembly and a rotor assembly, where the rotor assembly includes a rotor shaft; a reduction device disposed in the housing and connected to the electric motor; and a metal component disposed on the housing and/or inside the housing. The power tool further includes a connector connected in parallel at two ends of the reduction device; where a first end of the connector is also connected to the electric motor, and a second end of the connector is also connected to the metal component.

The present application has the following benefit: the stator assembly is directly connected to the metal base layer by the wire to reduce the radiated interference of the electric motor so that an external magnetic ring or capacitor is not required, the cost is low, and the space inside the power tool does not need to be occupied.

### BRIEF DESCRIPTION OF DRAWINGS

FIG. 1 is a perspective view of a mower according to an example.
FIG. 2 is a front view of electric motors of the mower in FIG. 1.
FIG. 3 is a perspective view of a driver board of the mower in FIG. 1.
FIG. 4 is a circuit block diagram of the mower in FIG. 1.
FIG. 5 is a multi-layer side view of the driver board in FIG. 3.
FIG. 6 is a perspective view of the driver board in FIG. 3, which includes capacitors.
FIG. 7 is a multi-layer side view of the driver board in FIG. 3, which includes a metal heat sink.
FIG. 8 is a side view showing that an electric motor is connected to a metal base layer of a driver board according to an example according to the invention.
FIG. 9 is a side view showing that an electric motor is connected to a circuit layer of a driver board according to an example not belonging to the invention.
FIG. 10 is a side view showing that an electric motor is connected to a metal heat sink of a driver board according to an example not belonging to the invention.
FIG. 11 is a simulation diagram of radiation values when a stator assembly is directly connected to a ground wire of a driver board by a wire according to an example.
FIG. 12 is a simulation diagram of radiation values when a stator assembly is connected to a ground wire of a driver board by a wire with a noise suppression device according to an example.
FIG. 13 is a simulation diagram of radiation values when a stator assembly is directly connected to a metal base layer of a driver board by a wire according to an example.
FIG. 14 is a view showing the bottom of the mower in FIG. 1.
FIG. 15 is a perspective view of an interior of the mower in FIG. 1, showing that an electric motor is engaged with a reduction device.
FIG. 16 is an enlarged view of D of FIG. 14.
FIG. 17 is a view showing that a connector connects an electric motor to a bearing mount according to an example.
FIG. 18A is a view showing that a connector connects an electric motor to the rear end of a housing according to an example.
FIG. 18B is a view showing that a connector connects an electric motor to the left side according to an example.
FIG. 18C is a view showing that a connector connects an electric motor to the rear end of a housing according to another example.
FIG. 19 is a view showing that a connector connects an electric motor to a bearing according to an example.
FIG. 20 is a simplified simulation diagram of radiation values as to whether a connector is connected or not according to an example.

### DETAILED DESCRIPTION

Before any examples of this application are explained in detail, it is to be understood that this application is not limited to its application to the structural details and the arrangement of components set forth in the following description or illustrated in the above drawings.

In this application, the terms "comprising", "including", "having" or any other variation thereof are intended to cover an inclusive inclusion such that a process, method, article or device comprising a series of elements includes not only those series of elements, but also other elements not expressly listed, or elements inherent in the process, method, article, or device. Without further limitations, an element defined by the phrase "comprising a ..." does not preclude the presence of additional identical elements in the process, method, article, or device comprising that element.

In this application, the term "and/or" is a kind of association relationship describing the relationship between associated objects, which means that there can be three kinds of relationships. For example, Aand/or B can indicate that A exists alone, A and B exist simultaneously, and B exists alone. In addition, the character "/" in this application generally indicates that the contextual associated objects belong to an "and/or" relationship.

In this application, the terms "connection", "combination", "coupling" and "installation" may be direct connection, combination, coupling or installation, and may also be indirect connection, combination, coupling or installation. Among them, for example, direct connection means that two members or assemblies are connected together without intermediaries, and indirect connection means that two members or assemblies are respectively connected with at least one intermediate members and the two members or assemblies are connected by the at least one intermediate members. In addition, "connection" and "coupling" are not limited to physical or mechanical connections or couplings, and may include electrical connections or couplings.

In this application, it is to be understood by those skilled in the art that a relative term (such as "about", "approximately", and "substantially") used in conjunction with quantity or condition includes a stated value and has a meaning dictated by the context. For example, the relative term includes at least a degree of error associated with the measurement of a particular value, a tolerance caused by manufacturing, assembly, and use associated with the particular value, and the like. Such relative term should also be considered as disclosing the range defined by the absolute values of the two endpoints. The relative term may refer to plus or minus of a certain percentage (such as 1%, 5%, 10%, or more) of an indicated value. A value that did not use the relative term should also be disclosed as a particular value with a tolerance. In addition, "substantially" when expressing a relative angular position relationship (for example, substantially parallel, substantially perpendicular), may refer to adding or subtracting a certain degree (such as 1 degree, 5 degrees, 10 degrees or more) to the indicated angle.

In this application, those skilled in the art will understand that a function performed by an assembly may be performed by one assembly, multiple assemblies, one member, or multiple members. Likewise, a function performed by a member may be performed by one member, an assembly, or a combination of members.

In this application, the terms "up", "down", "left", "right", "front", and "rear" and other directional words are described based on the orientation or positional relationship shown in the drawings, and should not be understood as limitations to the examples of this application. In addition, in this context, it also needs to be understood that when it is mentioned that an element is connected "above" or "under" another element, it can not only be directly connected "above" or "under" the other element, but can also be indirectly connected "above" or "under" the other element through an intermediate element. It should also be understood that orientation words such as upper side, lower side, left side, right side, front side, and rear side do not only represent perfect orientations, but can also be understood as lateral orientations. For example, lower side may include directly below, bottom left, bottom right, front bottom, and rear bottom.

In this application, the terms "controller", "processor", "central processor", "CPU" and "MCU" are interchangeable. Where a unit "controller", "processor", "central processing", "CPU", or "MCU" is used to perform a specific function, the specific function may be implemented by a single aforementioned unit or a plurality of the aforementioned unit.

In this application, the term "device", "module" or "unit" may be implemented in the form of hardware or software to achieve specific functions.

In this application, the terms "computing", "judging", "controlling", "determining", "recognizing" and the like refer to the operations and processes of a computer system or similar electronic computing device (e.g., controller, processor, etc.).

Power tools to which the technical solutions of the present application are applicable include handheld power tools, fastening power tools, cutting power tools, grinding power tools, and garden power tools. For example, the power tools include a blower, an electric drill, an electric circular saw, a reciprocating saw, an impact wrench, an impact screwdriver, a hammer drill, a mower, and a snow thrower. Other types of power tools which can adopt the substance of the technical solutions disclosed below are within the scope of the present application.

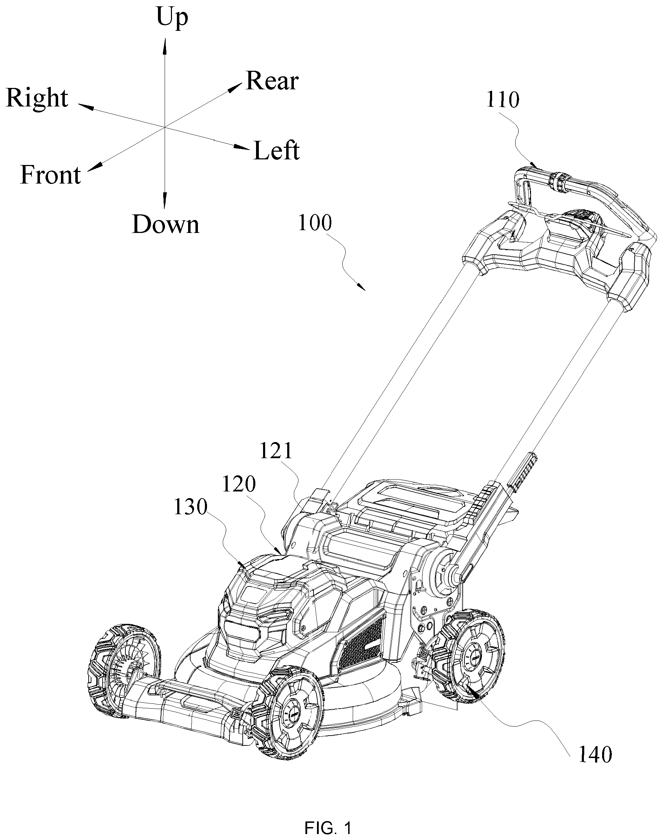

FIG. 1 shows a power tool which may specifically be a wheeled garden tool such as a mower 100 or a snow thrower. As an optional example, the power tool is described below by using the mower 100 as an example. Specifically, the mower 100 in this example is a push mower.

The mower 100 shown in FIG. 1 is configured for a user to cut grass in a lawn, for example, a lawn of a garden or a golf course. The grass in the lawn requires regular care and thus needs to be often cut with the mower 100. When operating the mower 100, the user stands behind the mower 100 and pushes the mower 100 to walk on the ground.

As shown in FIG. 1, the mower 100 includes a handle assembly 110, a body 120, and an energy storage device 130. The handle assembly 110 is located behind the body 120, and the handle assembly 110 is connected to the body 120 through two handle tubes. The handle assembly 110 includes a grip for the user to hold to operate the mower 100. The mower 100 is pushed through the handle assembly 110 so that the mower 100 advances, retreats, and turns. The body 120 includes a housing 121 and a chassis, and the handle assembly 110 is rotatably connected to the housing 121. The chassis is configured to accommodate at least part of a mowing element for implementing a mowing function of the mower 100. Multiple components included in the body 120 are reasonably mounted at various positions of the body 120. The energy storage device 130 is configured to supply power to the mower 100. The energy storage device 130 includes a battery pack 131 (not shown) and a connector for mounting the battery pack 131 to connect the battery pack 131 to the mower 100. The battery pack 131 is detachably connected to the connector, and the connector is detachably mounted to the mower 100 so that the battery pack 131 can be taken out to be adapted to other electrical devices.

To facilitate the description of technical solutions, a front side, a rear side, a left side, a right side, an upper side, and a lower side are defined, as shown in FIG. 1.

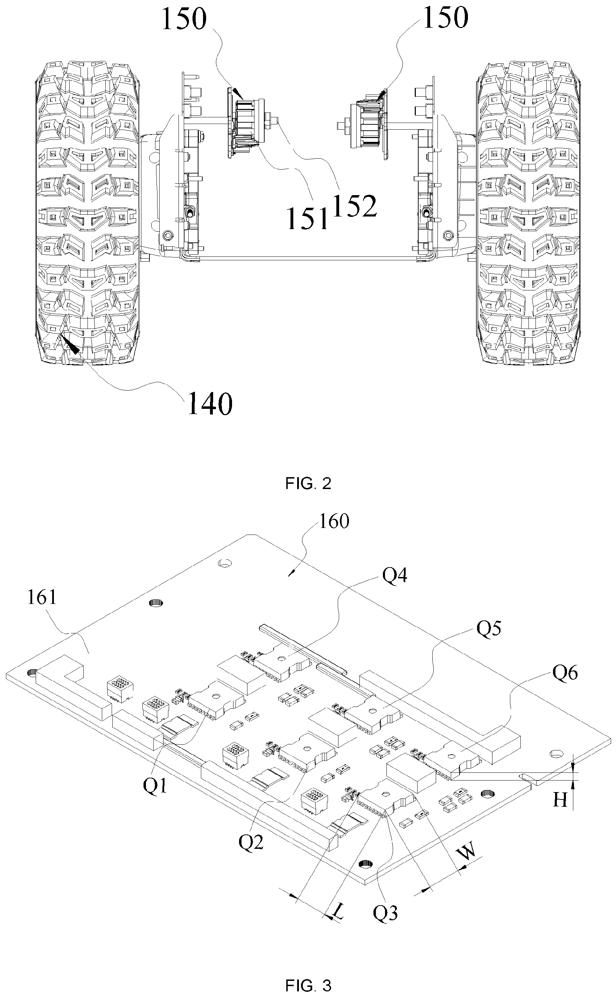

As shown in FIGS. 1 and 2, the mower 100 further includes traveling wheels 140 and electric motors 150. The traveling wheels 140 are connected to the body 120 and drive the mower 100 to walk on the ground. The traveling wheels 140 can at least drive the mower 100 to advance, retreat, and turn on the ground. The electric motors 150 are disposed in the housing 121. Each electric motor 150 includes a stator assembly 151 and a rotor assembly 152. The electric motors 150 are configured to drive the traveling wheels 140 to rotate. The traveling wheels 140 include two front traveling wheels and two rear traveling wheels. In this example, two electric motors 150 are included to drive the two rear traveling wheels one to one. In other examples, only one electric motor 150 may be included to drive multiple rear traveling wheels to operate. In other examples, the electric motors 150 may be configured to drive the front traveling wheels to rotate. Alternatively, the mower 100 includes a front driving electric motor and a rear driving electric motor, the front driving electric motor drives the front traveling wheels, and the rear driving electric motor drives the rear traveling wheels.

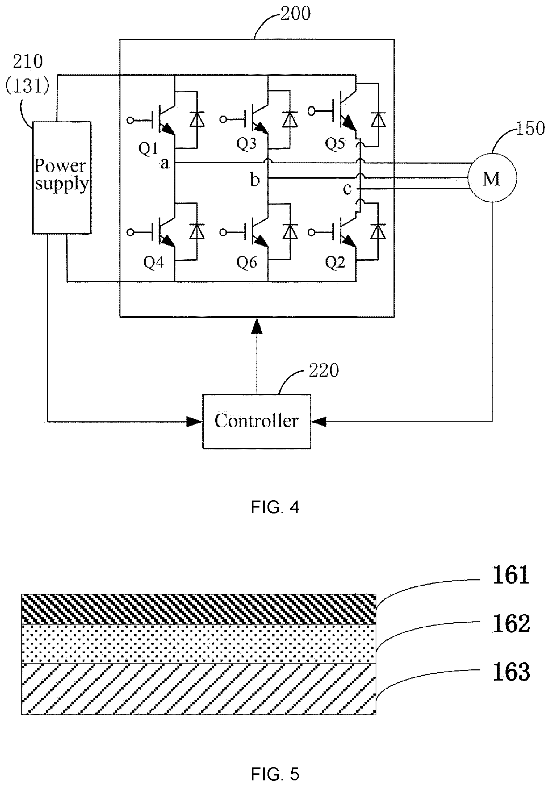

As shown in FIG. 3, the mower 100 further includes a driver board 160, multiple semiconductor switches Q1, Q2, Q3, Q4, Q5, and Q6 are disposed on the driver board 160, and the multiple semiconductor switches Q1 to Q6 form a driver circuit 200 electrically connected to the energy storage device 130. Referring to the circuit block diagram of the mower 100 shown in FIG. 4, a drive system for the electric motor 150 may include at least the driver circuit 200, a power supply 210, and a controller 220.

In some examples, the electric motor 150 is a brushless direct current electric motor (BLDC). In some examples, the electric motor 150 is a sensorless BLDC. In some examples, the electric motor 150 is a sensored BLDC. In the present application, the BLDC may be an inrunner or an outrunner, and the electric motor 150 includes at least three-phase stator windings, where the three-phase windings may be in a star connection or a delta connection.

In some examples, the power supply 210 may optionally be an alternating current (AC) power supply, that is, AC mains power of 120 V or 220 V may be connected through a power interface. In some examples, the power supply 210 may optionally be a battery pack composed of a group of battery cells. For example, the battery cells may be connected in series into a single power supply branch to form a 1P battery pack. In the present application, the power supply 210 is the battery pack 131, for example. An output voltage of the battery pack 131 is changed by a specific power supply control module such as a direct current-direct current (DC-DC) module so that a power supply voltage suitable for the driver circuit 200 and the electric motor 150 is outputted to supply power to the driver circuit 200 and the electric motor 150. It is to be understood by those skilled in the art that the DC-DC module is a mature circuit structure and may be selected accordingly according to specific parameter requirements of the power tool.

The driver circuit 200 is electrically connected to the stator windings of the electric motor 150 and configured to transmit a current from the power supply 210 (that is, the battery pack 131) to the stator windings to drive the electric motor 150 to rotate. In some examples, the driver circuit 200 includes the multiple semiconductor switches Q1, Q2, Q3, Q4, Q5, and Q6. A gate terminal of each semiconductor switch is electrically connected to the controller 220 and configured to receive a control signal from the controller 220. A drain or source of each semiconductor switch is connected to a stator winding a, b, or c of the electric motor 150. The semiconductor switches Q1 to Q6 receive control signals from the controller 220 to change their respective on states, thereby changing the current loaded to the stator windings of the electric motor 150 by the power supply 210. In some examples, the driver circuit 200 may be a three-phase bridge driver circuit including six controllable semiconductor power devices (such as field-effect transistors (FETs), bipolar junction transistors (BJTs), or insulatedgate bipolar transistors (IGBTs)). It is to be understood that the preceding semiconductor switches may be any other types of solid-state switches such as the IGBTs or the BJTs.

According to the invention, referring to the driver board 160 shown in FIG. 5, the driver board 160 includes a circuit layer 161, an insulating layer 162, and a metal base layer 163, where the circuit layer 161 is used for connecting circuit elements in the mower 100. Specifically, the circuit layer 161 may be an etched printed circuit to implement the assembly of and connections between the circuit elements. The metal base layer 163 supports the driver board 160 and can absorb heat generated by the driver board 160 and the circuit elements during working. Optionally, to enhance the heat dissipation effect of the driver board 160, the metal base layer 163 and the circuit layer 161 are both made of a thermally conductive material. The insulating layer 162 is disposed between the circuit layer 161 and the metal base layer 163 to insulate the circuit layer 161 from the metal base layer 163.

In some examples, the circuit layer 161 is made of a first conductive material which may be a metal copper or aluminum foil. The insulating layer 162 is made of an insulating material which may be an insulating material with relatively good thermal conductivity and insulation performance, such as a ceramic polymer. The metal base layer 163 is made of a second conductive material which may be metal copper, aluminum, iron, stainless steel, or the like. The metal base layer 163 may be a copper plate, an aluminum plate, an iron plate, a stainless steel plate, or the like. Since aluminum has good thermal conductivity, electrical insulation performance, and mechanical machining performance compared with other conductive materials, the aluminum plate is selected as the metal base layer 163 to facilitate the heat dissipation of the driver board 160 during working. Optionally, the multiple semiconductor switches Q1 to Q6 are disposed on the driver board 160 by being specifically disposed on the circuit layer 161.

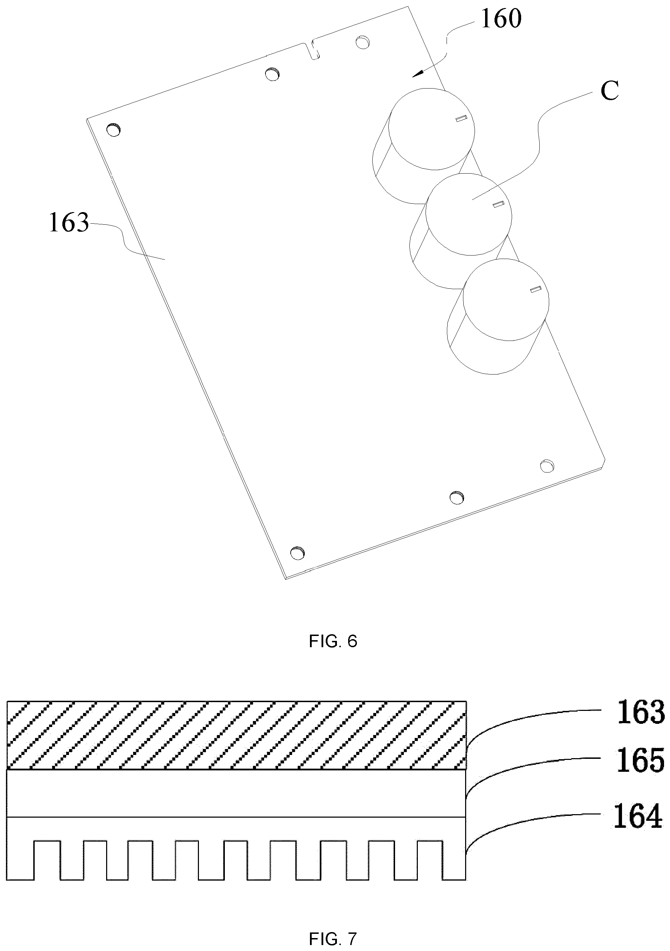

In some examples, as shown in FIG. 6, multiple capacitors C are also disposed on the driver board 160. Optionally, the capacitors C and the multiple semiconductor switches Q1 to Q6 are separately disposed on two sides of the driver board 160, that is, the capacitors C are specifically disposed on the metal base layer 163. Optionally, pins on the capacitors C penetrate through the metal base layer 163 and are in contact with the circuit layer 161 and fixed on the circuit layer 161. The metal base layer 163 is insulated from the capacitors C. Specifically, the driver board 160 includes an insulator disposed between the capacitors C and the metal base layer 163 to insulate the capacitors C from the metal base layer 163. In the present application, the insulator includes, but is not limited to, an adhesive dispensing insulation pad and/or an insulation sleeve. Additionally, the capacitors C may be disposed on the same side as the multiple semiconductor switches Q1 to Q6, that is, the capacitors C are specifically disposed on the circuit layer 161.

In some examples, the size of the driver board 160 is greater than or equal to 65 cm². Optionally, the length of the driver board 160 may be 90 mm and the width of the driver board 160 may be 76 mm, that is, the size of the driver board 160 may be 68.4 cm². Optionally, the size of the driver board 160 may be 70 cm². Optionally, the size of the driver board 160 may be 73.5 cm². Optionally, the size of the driver board 160 may be 80 cm². Optionally, the size of the driver board 160 may be 95 cm².

In some examples, the semiconductor switches Q1 to Q6 on the driver board 160 are all in a surface mount package. The surface mount package includes a D-PAK package, a small outline transistor (SOT) package, a small outline package (SOP), a quad flat package (QFP), a plastic leaded chip carrier (PLCC) package, and a TOLL package. Optionally, the semiconductor switches Q1 to Q6 may be in the TOLL package. The semiconductor switches Q1 to Q6 each include a source, a drain, and a gate. When the semiconductor switches Q1 to Q6 are in the TOLL package, sources of the semiconductor switches Q1 to Q6 have seven pins.

In some examples, the length L and the width W of any semiconductor switch of the semiconductor switches Q1 to Q6 are both greater than or equal to 9 mm. Optionally, the length L and the width W may both be 9 mm. Optionally, the length L may be 11 mm. Optionally, the length L may be 11.48 mm. Optionally, the length L may be 11.7 mm. Optionally, the length L may be 12.5 mm. Optionally, the length L may be 14.5 mm. Optionally, the width W may be 9.7 mm. Optionally, the width W may be 9.9 mm. Optionally, the width W may be 11.3 mm. Optionally, the width W may be 12.45 mm.

In some examples, the area of the driver board 160 occupied by any semiconductor switch of the semiconductor switches Q1 to Q6 is greater than or equal to 1 cm². Optionally, the area of the driver board 160 occupied by any semiconductor switch may be 1.11 cm². Optionally, the area of the driver board 160 occupied by any semiconductor switch may be 1.15 cm². Optionally, the area of the driver board 160 occupied by any semiconductor switch may be 1.2 cm². Optionally, the area of the driver board 160 occupied by any semiconductor switch may be 1.35 cm².

In some examples, the thickness H of any semiconductor switch of the semiconductor switches Q1 to Q6 is less than or equal to 3 mm. Optionally, the thickness H may be 2.85 mm. Optionally, the thickness H may be 2.6 mm. Optionally, the thickness H may be 2.3 mm. Optionally, the thickness H may be 1.5 mm.

Compared with the other packaging manners, the TOLL package has a relatively small thickness. The relatively small thickness specifically means that the thickness of the semiconductor switch in the TOLL package is relatively small. Moreover, compared with the other packaging manners, the TOLL package requires a relatively small number of components to be connected in parallel in applications, and the TOLL package has relatively good current and voltage resistance so that each semiconductor switch can achieve relatively good current and voltage resistance by using only one metal-oxide-semiconductor (MOS) transistor, overcoming the defect of the existing art that in the other packaging manners, each semiconductor needs to use two MOS transistors connected in parallel to achieve sufficient current and voltage resistance. Therefore, for a package area required by each semiconductor switch, the TOLL package requires only one MOS transistor, and the area occupied by the semiconductor switch in the TOLL package is smaller than the area occupied in the other packaging manners. Additionally, the TOLL package has a relatively high power density, ultra-low on-resistance and parasitic inductance, and very good electromagnetic interference (EMI) performance and thermal performance.

Additionally, the TOLL package has a relatively low temperature rise. Therefore, the cooling requirement of the semiconductor switches can be reduced when the semiconductor switches Q1 to Q6 on the driver board 160 are in the TOLL package. Meanwhile, since the metal base layer 163 of the driver board 160 is the aluminum plate and the aluminum plate has a relatively good heat dissipation effect, the heat dissipation effect of the semiconductor switches Q1 to Q6 is better in conjunction with the TOLL package. For example, when tested at an ambient temperature of 26 °C and a continuous overcurrent of 40 A, an ordinary printed circuit board (PCB) with the TOLL package has a temperature rise of 61 °C when heat is dissipated through the PCB. However, the aluminum plate with the TOLL package has a greatly reduced temperature rise of only 32 °C when heat is dissipated through the aluminum plate.

In some examples, the rated power of the electric motor 150 is greater than or equal to 1000 W. Optionally, the rated power of the electric motor 150 is 1200 W. Optionally, the rated power of the electric motor 150 is 1500 W. Optionally, the rated power of the electric motor 150 is 1800 W. Optionally, the rated power of the electric motor 150 is 2000 W. Optionally, the rated power of the electric motor 150 is 2500 W. In some examples, the voltage of the energy storage device 130 is greater than or equal to 18 V. Optionally, the voltage of the energy storage device 130 is 24 V. Optionally, the voltage of the energy storage device 130 is 36 V. Optionally, the voltage of the energy storage device 130 is 48 V. Optionally, the voltage of the energy storage device 130 is 56 V. Optionally, the voltage of the energy storage device 130 is 72 V. When the rated power of the electric motor 150 is relatively large or the voltage of the energy storage device 130 is relatively high, since the semiconductor switches Q1 to Q6 are in the TOLL package in the present application and the TOLL package can withstand a relatively large current and is not easily broken down, the safety and reliability of the driver board 160 are improved.

To sum up, the TOLL package can bring higher reliability, higher efficiency, and lower costs compared with the other manners.

Therefore, it is defined in the present application that the metal base layer 163 of the driver board 160 is the aluminum plate and the semiconductor switches Q1 to Q6 on the driver board 160 are in the TOLL package, that is, the MOS transistor in the TOLL package is applied to the aluminum plate in the mower 100 so that each semiconductor switch needs to use only one MOS and is guaranteed to have relatively good current and voltage resistance.

In some examples, the diameter of the electric motor 150 is greater than or equal to 60 mm. Optionally, the diameter of the electric motor 150 may be 65 mm. Optionally, the diameter of the electric motor 150 may be 70 mm. In some examples, the diameter of the electric motor 150 is greater than or equal to 90 mm. Optionally, the diameter of the electric motor 150 may be 100 mm. Optionally, the diameter of the electric motor 150 may be 120 mm. Optionally, the diameter of the electric motor 150 may be 150 mm.

In some examples, the rated rotational speed of the electric motor 150 is greater than or equal to 2000 rpm. Optionally, the rated rotational speed of the electric motor 150 is 2200 rpm. Optionally, the rated rotational speed of the electric motor 150 is 2200 rpm. Optionally, the rated rotational speed of the electric motor 150 is 2500 rpm. Optionally, the rated rotational speed of the electric motor 150 is 2800 rpm. Optionally, the rated rotational speed of the electric motor 150 is 3000 rpm.

In some examples, the mower 100 further includes a heat sink 164 made of a metal material, that is, a metal heat sink. Hereinafter, the metal heat sink 164 is used instead of the heat sink 164. As shown in FIG. 7, the metal heat sink 164 is connected to the driver board 160, and the metal heat sink 164 is connected to the metal base layer 163. Optionally, the metal heat sink 164 includes multiple heat dissipation sheets arranged in parallel and protruding along a direction perpendicular to the metal base layer 163. Optionally, the metal heat sink 164 may be directly composed of heat sink fins. In some examples, a thermally conductive layer 165 is further disposed between the metal base layer 164 and the metal heat sink 164, and the thermally conductive layer 165 absorbs heat of the metal base layer 164 and dissipates the heat through the metal heat sink 164 to reduce the temperature of the driver board 160. Optionally, the thermally conductive layer 165 may be made of a thermally conductive interface material, such as thermally conductive silicone. The thermally conductive layer 165 is disposed so that the heat dissipation effect of the driver board 160 can be further enhanced.

To reduce radiated interference of the electric motor 150, the stator assembly 151 of the electric motor 150 needs to be connected to a metal component or be grounded.

According to the invention, the stator assembly 151 of the electric motor 150 is directly connected to the metal base layer 163 of the driver board 160 by a wire 300 to reduce the radiated interference of the electric motor 150. That the stator assembly 151 is directly connected to the metal base layer 163 by the wire 300 means that the stator assembly 151 is not connected to the metal base layer 163 via a noise suppression device 310. Two ends of the wire 300 are directly connected to the stator assembly 151 and the metal base layer 163 respectively, no device is disposed on the wire 300, and the wire 300 is not connected to other components and is connected to and in contact with only the stator assembly 151 and the metal base layer 163. Optionally, the noise suppression device 310 includes a capacitor and a magnetic ring.

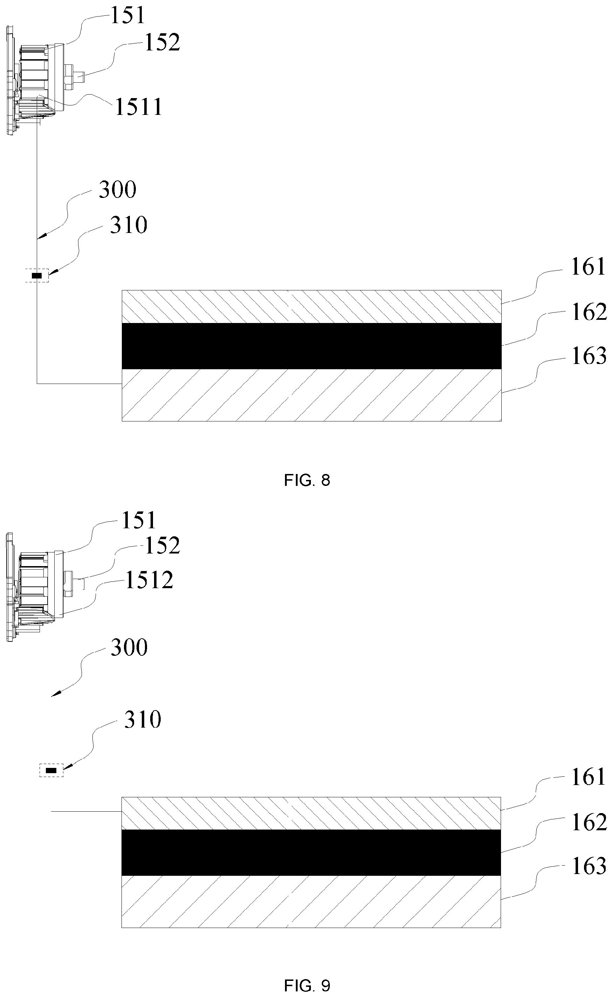

In some examples, when the electric motor 150 is the inrunner, one end of the wire 300 is connected to a stator core 1511 of the stator assembly 151, and the other end of the wire 300 is connected to the metal base layer 163. In some examples, when the electric motor 150 is the outrunner, one end of the wire 300 is connected to a stator cap 1512 of the stator assembly 151, and the other end of the wire 300 is connected to the metal base layer 163. As shown in FIG. 8, in the present application, the electric motor 150 is the inrunner, for example, and the two ends of the wire 300 are connected to the stator core 1511 of the stator assembly 151 and the metal base layer 163 respectively without using the noise suppression device 310, so as to reduce the radiated interference of the electric motor 150.

In some examples not belonging to the invention, the stator assembly 151 of the electric motor 150 is directly connected to the driver board 160 by the wire 300 to reduce the radiated interference of the electric motor 150, without using the noise suppression device 310. The stator assembly 151 of the electric motor 150 is specifically connected to a ground wire of the driver board 160 by the wire 300 to reduce the radiated interference of the electric motor 150, that is, connected to a ground wire on the circuit layer 161 of the driver board 160. When the electric motor 150 is the inrunner or the outrunner, a specific connection manner between the stator assembly 151 and the driver board 160 is the same as a specific connection manner between the stator assembly 151 and the metal base layer 163, and the details are not repeated here. As shown in FIG. 9, the electric motor 150 is the outrunner, for example, and is connected to the driver board 160 by the wire 300, and the two ends of the wire 300 are connected to the stator cap 1512 of the stator assembly 151 and the ground wire of the circuit layer 161 respectively, without using the noise suppression device 310.

In some examples not belonging to the invention, the stator assembly 151 of the electric motor 150 is directly connected to the housing 121 by the wire 300 to reduce the radiated interference of the electric motor 150, without using the noise suppression device 310. A specific position of the housing 121 connected to the wire 300 is not limited in the present application, and the wire 300 may be connected to any position of the housing 121. Optionally, the wire 300 may be preferably connected to a position of the housing 121 with a shortest distance from the stator assembly 151.

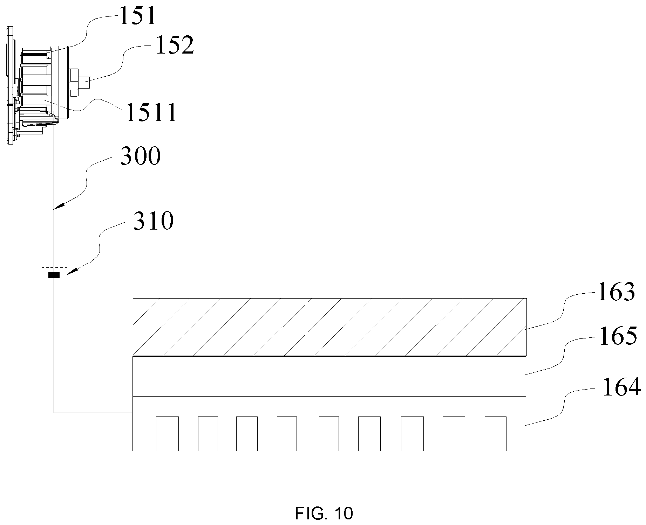

In some examples not belonging to the invention, the stator assembly 151 of the electric motor 150 may be directly connected to the metal heat sink 164 by the wire 300 to reduce the radiated interference of the electric motor 150, without using the noise suppression device 310. Similarly, when the electric motor 150 is the inrunner or the outrunner, a specific connection manner between the stator assembly 151 and the housing 121 or the metal heat sink 164 is the same as the specific connection manner between the stator assembly 151 and the metal base layer 163, and the details are not repeated here. As shown in FIG. 10, the electric motor 150 is the inrunner, for example, and is connected to the metal heat sink 164 by the wire 300, and the two ends of the wire 300 are connected to the stator core 1511 of the stator assembly 151 and the metal heat sink 164 respectively, without using the noise suppression device 310.

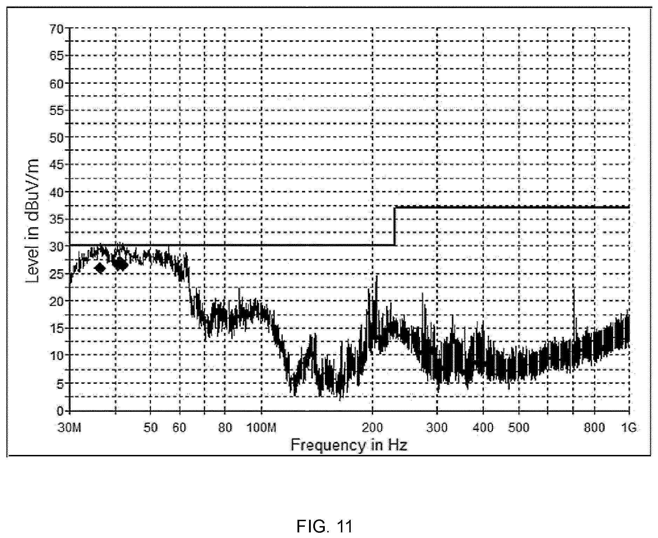

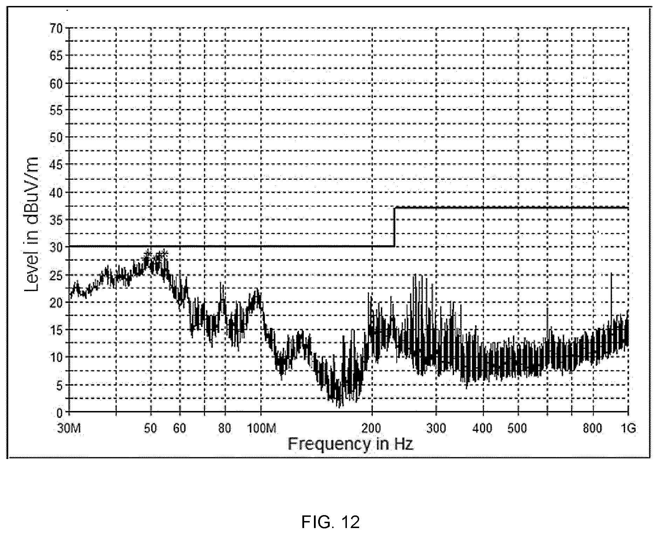

In some examples, FIG. 11 is a simulation diagram of radiation values when the stator assembly 151 is directly connected to the ground wire of the driver board 160 by the wire 300. FIG. 12 is a simulation diagram of radiation values when the stator assembly 151 is connected to the ground wire of the driver board 160 by the wire 300 with the noise suppression device 310. In FIGS. 11 and 12, the horizontal axis represents a frequency, the vertical axis represents a radiation value, and a straight line changing along the horizontal axis represents a radiation maximum-limit composed of maximum radiation limits corresponding to different frequencies. As can be seen from FIGS. 11 and 12, compared with those in FIG. 11, actual radiation values corresponding to different frequencies in FIG. 12 where the noise suppression device 310 is used are further lower than the corresponding radiation maximum-limit, and the radiated interference of the electric motor 150 is reduced better by using the noise suppression device 310. However, the magnetic ring or the capacitor included in the noise suppression device 310 occupies space inside the mower 100 and results in a higher cost. As can be seen from FIG. 11, when the stator assembly 151 is directly connected to the ground wire of the driver board 160 by the wire 300, the radiated interference of the electric motor 150 is not reduced as well as FIG. 12 but is still lower than the radiation maximum-limit. In this case, the requirement for reducing the radiated interference can be basically satisfied.

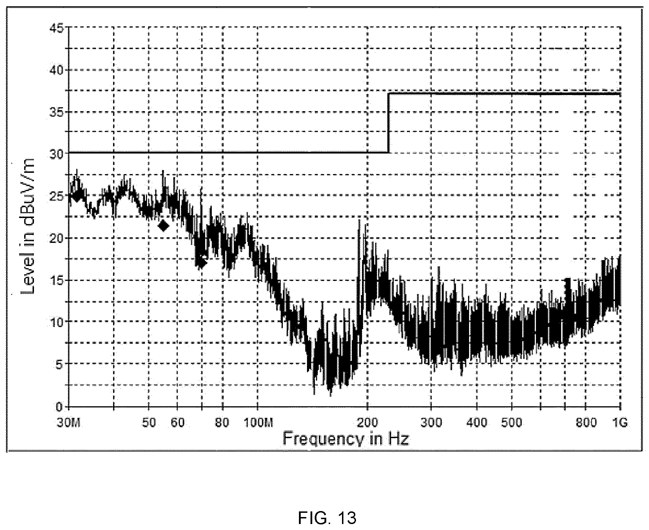

In some examples, FIG. 13 is a simulation diagram of radiation values when the stator assembly 151 is directly connected to the metal base layer 163 of the driver board 160 by the wire 300. As can be clearly seen from FIG. 13, compared with those in FIGS. 11 and 12, actual radiation values corresponding to different frequencies in FIG. 13 are significantly lower than the corresponding radiation maximum-limit. For example, the actual radiation values within a range of 30 MHz to 60 MHz in FIG. 11 are almost close to 30 dBuV/m, the actual radiation values corresponding to 50 MHz to 60 MHz in FIG. 12 are also almost close to 30 dBuV/m, and the actual radiation values in FIG. 13 fluctuate up and down around 25 dBuV/m.

In some examples, two point values are taken for each of the three types of reducing the radiated interference of the electric motor 150 corresponding to FIGS. 11, 12, and 13, as detailed in Table 1 below. As can be seen from Table 1, when the stator assembly 151 is directly connected to the ground wire of the driver board 160 by the wire 300, an actual radiation value corresponding to 40.7185 MHz is 30.42 dBuV/m; and when the stator assembly 151 is directly connected to the metal base layer 163 of the driver board 160 by the wire 300, an actual radiation value corresponding to 31.5035 MHz is 24.87 dBuV/m. Although 31.5035 MHz is lower than 40.7185 MHz, the actual radiation value of 24.87 dBuV/m is smaller than 30.42 dBuV/m. It can be seen that the radiated interference of the electric motor 150 is reduced significantly better when the stator assembly 151 is directly connected to the metal base layer 163 of the driver board 160 by the wire 300 than when the stator assembly 151 is directly connected to the ground wire of the driver board 160 by the wire 300. Similarly, 28 dBuV/m corresponding to 52.504 MHz when the stator assembly 151 is connected to the ground wire of the driver board 160 by the wire 300 with the noise suppression device 310 is compared with 21.43 dBuV/m corresponding to 54.8805 MHz when the stator assembly 151 is directly connected to the metal base layer 163 of the driver board 160 by the wire 300, and it can be seen that the radiated interference of the electric motor 150 is reduced significantly better when the stator assembly 151 is directly connected to the metal base layer 163 of the driver board 160 by the wire 300 than when the stator assembly 151 is directly connected to the ground wire of the driver board 160 by the wire 300 with the noise suppression device 310.

Therefore, when the stator assembly 151 is directly connected to the metal base layer 163 of the driver board 160 by the wire 300, the radiated interference of the electric motor 150 is reduced best.

**Table 1**

| Type of Reducing the Radiated Interference of the Electric Motor | Frequency (MHz) | MaxPeak (dBuV/m) |
|---|---|---|
| The stator assembly is directly connected to the ground wire of the driver board by the wire | 36.4020 | 30.54 |
| | 40.7185 | 30.42 |
| The stator assembly is connected to the ground wire of the driver board by the wire with the noise suppression device | 48.4300 | 28.10 |
| | 52.5040 | 28.00 |
| The stator assembly is directly connected to the metal base layer of the driver board by the wire | 31.5035 | 24.87 |
| | 54.8805 | 21.43 |

Therefore, in the present application, in the case where the noise suppression device is not used so that the cost is reduced and the space inside the mower 100 is saved, the stator assembly 151 of the electric motor 150 is directly connected to the metal base layer 163 of the driver board 160, by the wire 300 so that the radiated interference of the electric motor 150 can also be reduced. The radiated interference of the electric motor 150 is reduced significantly better when the stator assembly 151 of the electric motor 150 is according to the invention directly connected to the metal base layer 163 of the driver board 160 by the wire 300 than when the noise suppression device is used.

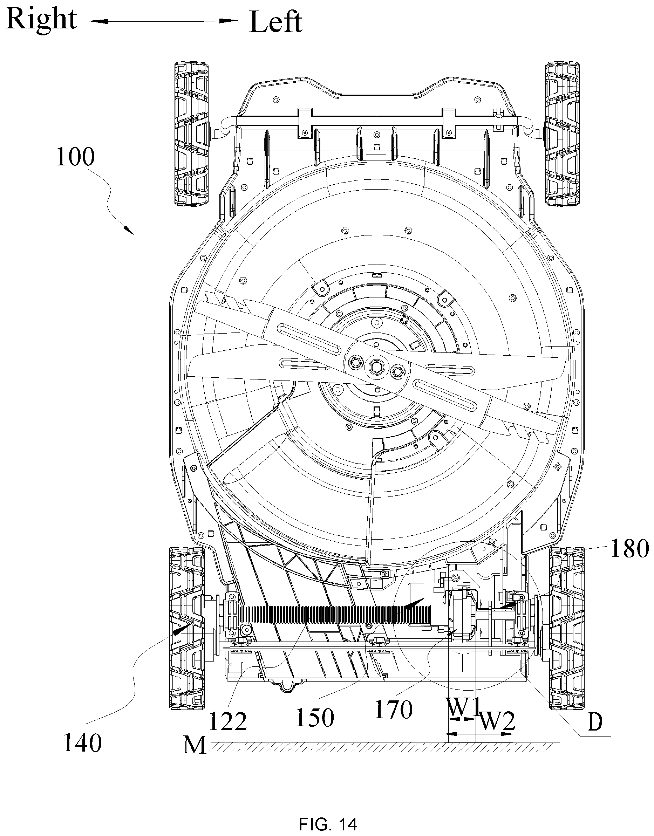

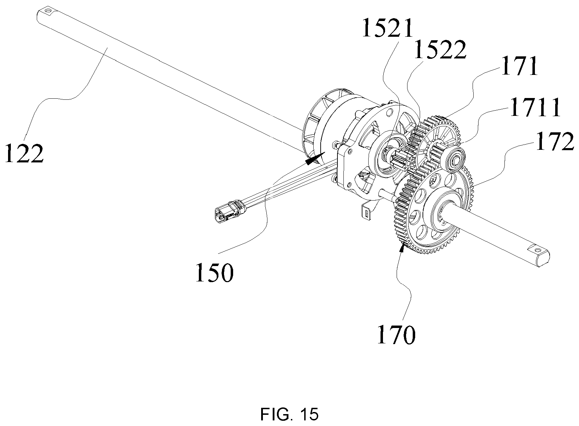

In some examples, the body 120 includes a bearing 122 for connecting the two front traveling wheels or the two rear traveling wheels. In the present application, the bearing 122 is a rear bearing of the mower 100, for example. The mower 100 further includes a reduction device 170 disposed in the housing 121 and connected to the electric motor 150. As shown in FIGS. 14 and 15, the reduction device 170 is sleeved on the bearing 122 and connected to the electric motor 150 outside the bearing 122. The rotor assembly 152 of the electric motor 150 includes a rotor shaft 1521, and a rotor shaft gear 1522 is sleeved on the rotor shaft 1521. The reduction device 170 includes a first gear 171 and a second gear 172, where the first gear 171 is in contact with the rotor shaft 1521, the first gear 171 meshes with the second gear 172, and the second gear 172 is sleeved on the bearing 122. Specifically, the first gear 171 meshes with the rotor shaft gear 1522, a pinion 1711 is disposed at an end of a rotating shaft of the first gear 171, and the pinion 1711 meshes with the second gear 172. Thus, when the electric motor 150 rotates, the rotor shaft gear 1522 on the rotor shaft 1521 drives the first gear 171 to rotate, the first gear 171 drives the pinion 1711 to rotate synchronously, and the pinion 1711 drives the second gear 172 to rotate so that the bearing 122 rotates and drives the two rear traveling wheels to rotate. Meanwhile, in the process of the electric motor 150 driving the two rear traveling wheels to rotate, based on the transmission deceleration of the first gear 171 and the second gear 172, the rear traveling wheels can rotate at a suitable rotational speed.

Since the electric motor 150 is connected to the reduction device 170 to enable the rear traveling wheels to rotate normally, during operation of the mower 100, a current always flows from the electric motor 150 through the reduction device 170 to the bearing 122. The first gear 171 and the second gear 172 inside the reduction device 170 generate relatively large resistance during working. In the case where the current remains unchanged, a voltage corresponding to the reduction device 170 increases, and therefore the electric motor 150 generates relatively large electromagnetic radiation based on the gears in the reduction device 170 during operation.

A metal component is disposed on the housing 121 or inside the housing 121 of the mower 100. The mower 100 further includes a connector 180, one end of the connector 180 is connected to the electric motor 150, and the other end of the connector 180 is connected to the metal component. When the driver board 160 is connected to the electric motor 150, a loop where the driver board 160 is located is a first loop, and when the connector 180 is connected to the electric motor 150, a loop where the connector 180 is located is a second loop, where the first loop is not connected to the second loop, that is, the metal component connected to the connector 180 does not include the driver board 160. Optionally, the connector 180 may be a wire. Optionally, the connector 180 may be a metal connector, such as a metal connection wire or a metal connection plate. Additionally, the connector 180 may be made of any conductive material, which is not limited in the present application.

That the connector 180 is separately connected to the electric motor 150 and the metal component specifically means that the connector 180 is connected in parallel at two ends of the reduction device 170, a first end 181 connected to the reduction device 170 is also connected to the electric motor 150, and a second end 182 connected to the reduction device 170 is also connected to the metal component. As shown in FIG. 14, the reduction device 170 forms a first projection W1 on a plane M parallel to the rotor shaft 1521, and the connector 180 forms a second projection W2 on the plane M, where the first projection W1 at least partially overlaps the second projection W2. Thus, during operation of the mower 100, the current can flow from the electric motor 150 through the connector 180 to the metal component connected to the second end 182 of the connector 180. In this case, the current does not flow through the reduction device 170, thereby reducing the electromagnetic radiation generated by the electric motor 150.

The first end 181 of the connector 180 is connected to the electric motor 150 in multiple manners, which are specifically described below.

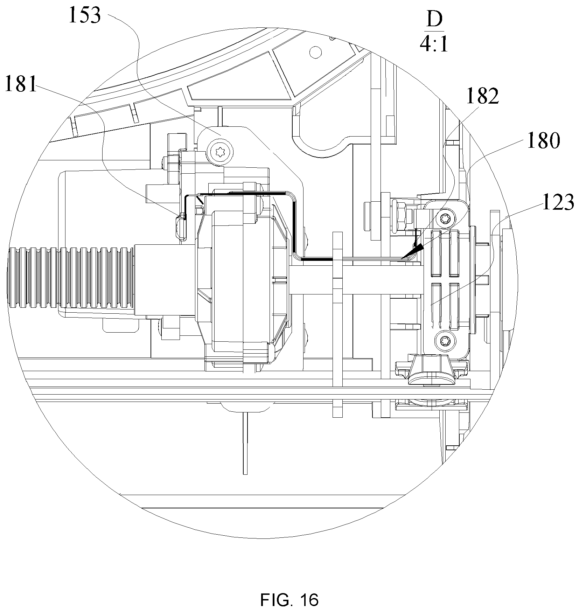

In some examples, as shown in FIG. 16, the electric motor 150 is disposed inside a motor mount 153, and the connector 180 is connected to the electric motor 150 by being specifically connected to a metal piece on the motor mount 153. When the motor mount 153 is a metal motor mount, the connector 180 may be connected to any position of the motor mount 153; when the motor mount 153 is a non-metal motor mount, the connector 180 may be connected to the metal piece such as a fixing screw on the motor mount 153.

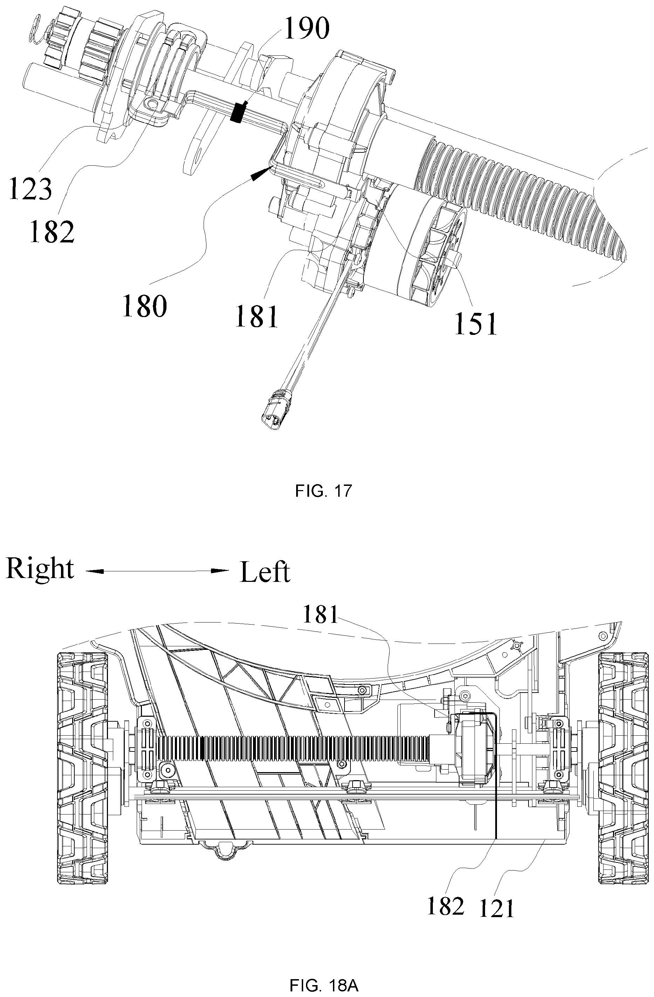

In some examples, when the electric motor 150 is the inrunner, one end of the connector 180 is connected to the stator core 1511 of the stator assembly 151, and the other end of the connector 180 is connected to the metal component disposed on the housing 121 and/or inside the housing 121. In some examples, when the electric motor 150 is the outrunner, one end of the connector 180 is connected to the stator cap 1512 of the stator assembly 151, and the other end of the connector 180 is connected to the metal component disposed on the housing 121 and/or inside the housing 121. As shown in FIG. 17, in the present application, the electric motor 150 is the inrunner, for example, and two ends of the connector 180 are connected to the stator core 1511 of the stator assembly 151 and the metal component disposed on the housing 121 and/or inside the housing 121, respectively, so as to reduce the radiated interference of the electric motor 150.

The second end 182 of the connector 180 is connected in multiple manners to the metal component disposed on the housing 121 and/or inside the housing 121, which are specifically described below.

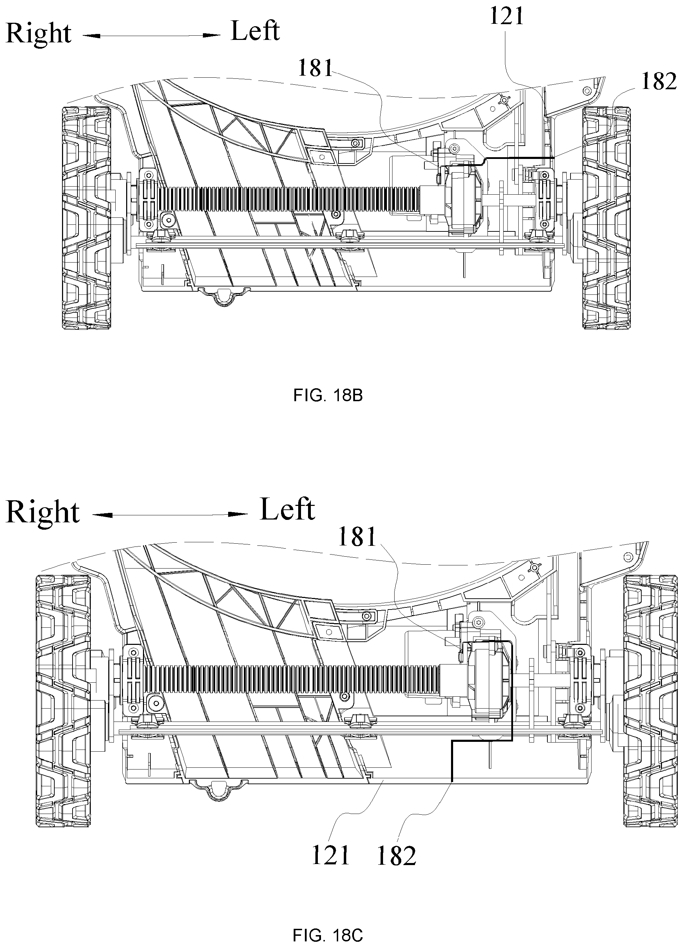

In some examples, when the housing 121 is a metal housing, the metal component disposed on the housing 121 is the housing itself, and the second end 182 of the connector 180 may be connected to any position of the housing 121 at which the connector 180 is convenient for the user to mount or detach, which is not limited in the present application. As shown in FIG. 18A, after the connector 180 crosses the reduction device 170, the connector 180 extends along a front and rear direction so that the second end 182 of the connector 180 is connected to the rear end of the housing 121. As shown in FIG. 18B, after the connector 180 crosses the reduction device 170, the connector 180 extends along a left and right direction so that the second end 182 of the connector 180 is connected to the left side of the housing 121. As shown in FIG. 18C, after the connector 180 crosses the reduction device 170, the connector 180 extends along an up and down direction and then along the left and right direction to cross the reduction device 170 again so that the second end 182 of the connector 180 is connected to the rear end of the housing 121. Additionally, the second end 182 of the connector 180 may be connected to another position of the housing 121, which is not limited in the present application.

In some examples, when the housing 121 is a non-metal housing, the metal component is disposed on the inner surface of the housing 121, and the second end 182 of the connector 180 may be connected to the metal component on the housing 121. The metal component may be disposed on the rear side, front side, left side, right side, or any other part of the housing 121, and multiple metal components may be provided and the connector 180 is connected to a metal component relatively close to the connector 180.

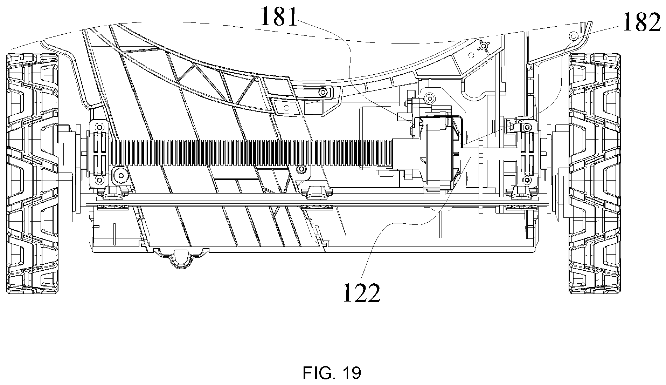

In some examples, the metal component is a component inside the housing 121, that is, a metal component inside the mower 100. Optionally, the metal component may be the bearing 122 of the mower 100. As shown in FIG. 19, after the connector 180 crosses the reduction device 170, the connector 180 extends along the left and right direction so that the second end 182 of the connector 180 is connected to the bearing 122. Optionally, the metal component may be a bearing mount 123. As shown in FIGS. 16 and 17, after the connector 180 crosses the reduction device 170, the connector 180 extends along the left and right direction so that the second end 182 of the connector 180 is connected to the bearing mount 123. Additionally, the metal component may be another metal component inside the mower 100, which is not limited in the present application. After crossing the reduction device 170, the connector 180 may extend along the up and down direction, may extend along the up and down direction and then along the left and right direction again, or may extend obliquely so that the second end 182 is connected to the metal component, which is not limited in the present application.

In some examples, the mower 100 further includes a filter assembly 190. As shown in FIG. 17, the filter assembly 190 is disposed on the connector 180. The first end 181 of the connector 180 is connected to the electric motor 150, the connector 180 is connected to the filter assembly 190 in the extension process, and then the second end 182 is connected to the metal component. Alternatively, the second end 182 of the connector 180 is connected to the metal component, the connector 180 is connected to the filter assembly 190 in the extension process, and then the first end 181 is connected to the electric motor 150. The filter assembly 190 can filter part of signals of the current flowing through the connector 180, thereby reducing the probability that the metal component connected to the second end 182 of the connector 180 is damaged by the current. The filter assembly 190 may be a capacitor.

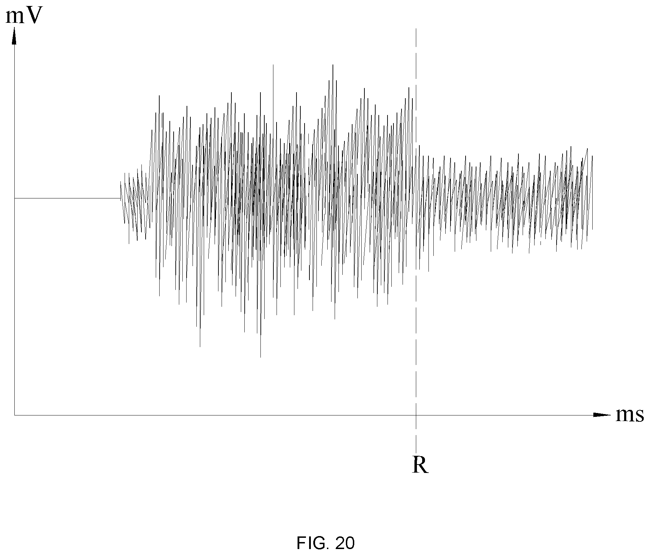

In some examples, FIG. 20 is a simplified waveform diagram of radiation values of the electric motor 150 before and after the connector 180 is connected, where the horizontal axis represents time in ms, and the vertical axis represents the radiation value in mV. The straight line R in FIG. 20 indicates when the connector is connected. It can be clearly seen from FIG. 20 that radiation values before the straight line R are relatively large and radiation values after the straight line R are significantly smaller, that is, the radiation value is significantly reduced after the connector 180 is connected in parallel at the two ends of the reduction device 170. Before the connector 180 is connected, the radiation value is 448 mV which does not comply with the standards of radiated interference for the mower 100, and the interference is relatively large. After the connector 180 is connected, the radiation value drops to 148 mV which complies with the standards of radiated interference for the mower 100, and the interference is relatively small. Therefore, when the connector 180 is connected in parallel at the two ends of the reduction device 170, the radiated interference of the electric motor 150 can be reduced to a relatively large extent when the radiated interference is relatively large.

The basic principles, main features, and advantages of this application are shown and described above. It is to be understood by those skilled in the art that the aforementioned examples do not limit the present application in any form, and all technical solutions obtained through equivalent substitutions or equivalent transformations fall within the scope of the invention as defined in the appended claims.

## Claims

1. A power tool, comprising:
a housing (121);
an energy storage device (130) configured to supply power to the power tool;
an electric motor (150) disposed in the housing and comprising a stator assembly (151) and a rotor assembly (152);
a driver board (160) comprising a circuit layer (161) and an insulating layer (162), wherein a plurality of semiconductor switches are disposed on the circuit layer, and wherein a driver circuit (200) formed by the plurality of semiconductor switches is electrically connected to the energy storage device; and
a controller (220) configured to control the plurality of semiconductor switches to be turned on and off to adjust power supply from the energy storage device to the electric motor;
**characterized in that**
the driver board comprises a metal base layer (163),
wherein the stator assembly is directly connected to the metal base layer by a wire (300).

2. The power tool according to claim 1, wherein the metal base layer is made of aluminum.

3. The power tool according to claim 1, wherein the stator assembly is connected to the metal base layer without a noise suppression device (310).

4. The power tool according to claim 1, wherein two ends of the wire are directly connected to the stator assembly and the metal base layer respectively to reduce radiated interference of the electric motor.

5. The power tool according to claim 1, wherein the electric motor is an inrunner, and the wire is connected to a stator core (1511) of the stator assembly.

6. The power tool according to claim 1, wherein the electric motor is an outrunner, and the wire is connected to a stator cap (1512) of the stator assembly.

7. The power tool according to claim 1, wherein the power tool is a wheeled garden tool.

8. The power tool according to claim 1, wherein a diameter of the electric motor is greater than or equal to 60 mm.

9. The power tool according to claim 1, wherein a rated rotational speed of the electric motor is greater than or equal to 2000 rpm.

10. The power tool according to claim 1, wherein a voltage of the energy storage device is greater than or equal to 18 V.

11. The power tool according to claim 1, wherein the plurality of semiconductor switches are in a transistor outline leadless (TOLL) package.

12. The power tool according to claim 11, wherein a length and a width of a single one of the plurality of semiconductor switches are both greater than or equal to 9 mm.

13. The power tool according to claim 11, wherein a thickness of a single one of the plurality of semiconductor switches is less than or equal to 3 mm.

14. The power tool according to claim 1, further comprising a metal heat sink (164) connected to the metal base layer.

15. The power tool according to claim 14, wherein a thermally conductive layer (165) is disposed between the metal heat sink and the metal base layer.

## Patentansprüche

1. Ein Elektrowerkzeug, umfassend:
ein Gehäuse (121);
eine Energiespeichervorrichtung (130), die dazu ausgebildet ist, das Elektrowerkzeug mit Energie zu versorgen;
einen Elektromotor (150), der in dem Gehäuse angeordnet ist und eine Statoranordnung (151) und eine Rotoranordnung (152) umfasst;
eine Treiberplatine (160), die eine Schaltungsschicht (161) und eine Isolierschicht (162) umfasst, wobei eine Mehrzahl von Halbleiterschaltern auf der Schaltungsschicht angeordnet ist, und wobei eine durch die Mehrzahl von Halbleiterschaltern gebildete Treiberschaltung (200) elektrisch mit der Energiespeichervorrichtung verbunden ist; und
eine Steuereinrichtung (220), die dazu ausgebildet ist, die Mehrzahl von Halbleiterschaltern so zu steuern, dass sie ein- und ausgeschaltet werden, um die Energieversorgung von der Energiespeichervorrichtung zu dem Elektromotor anzupassen;
**dadurch gekennzeichnet, dass**
die Treiberplatine eine Metallbasisschicht (163) umfasst,
wobei die Statoranordnung mittels eines Drahts (300) direkt mit der Metallbasisschicht verbunden ist.

2. Das Elektrowerkzeug nach Anspruch 1, wobei die Metallbasisschicht aus Aluminium hergestellt ist.

3. Das Elektrowerkzeug nach Anspruch 1, wobei die Statoranordnung ohne eine Entstörvorrichtung (310) mit der Metallbasisschicht verbunden ist.

4. Das Elektrowerkzeug nach Anspruch 1, wobei zwei Enden des Drahts direkt mit der Statoranordnung bzw. der Metallbasisschicht verbunden sind, um abgestrahlte elektromagnetische Störungen des Elektromotors zu reduzieren.

5. Das Elektrowerkzeug nach Anspruch 1, wobei der Elektromotor ein Innenläufer ist und der Draht mit einem Statorkern (1511) der Statoranordnung verbunden ist.

6. Das Elektrowerkzeug nach Anspruch 1, wobei der Elektromotor ein Außenläufer ist und der Draht mit einer Statorkappe (1512) der Statoranordnung verbunden ist.

7. Das Elektrowerkzeug nach Anspruch 1, wobei das Elektrowerkzeug ein fahrbares Gartengerät ist.

8. Das Elektrowerkzeug nach Anspruch 1, wobei ein Durchmesser des Elektromotors größer als oder gleich 60 mm ist.

9. Das Elektrowerkzeug nach Anspruch 1, wobei eine Nenndrehzahl des Elektromotors größer als oder gleich 2000 rpm ist.

10. Das Elektrowerkzeug nach Anspruch 1, wobei eine Spannung der Energiespeichervorrichtung größer als oder gleich 18 V ist.

11. Das Elektrowerkzeug nach Anspruch 1, wobei die Mehrzahl von Halbleiterschaltern in einem Transistor-outline-leadless-(TOLL)-Gehäuse untergebracht sind.

12. Das Elektrowerkzeug nach Anspruch 11, wobei eine Länge und eine Breite eines einzelnen Halbleiterschalters der Mehrzahl von Halbleiterschaltern beide größer als oder gleich 9 mm sind.

13. Das Elektrowerkzeug nach Anspruch 11, wobei eine Dicke eines einzelnen Halbleiterschalters der Mehrzahl von Halbleiterschaltern kleiner als oder gleich 3 mm ist.

14. Das Elektrowerkzeug nach Anspruch 1, ferner umfassend einen Metallkühlkörper (164), der mit der Metallbasisschicht verbunden ist.

15. Das Elektrowerkzeug nach Anspruch 14, wobei eine wärmeleitende Schicht (165) zwischen dem Metallkühlkörper und der Metallbasisschicht angeordnet ist.

## Revendications

1. Un outil électrique, comprenant :
un boîtier (121) ;
un dispositif de stockage d'énergie (130) configuré pour alimenter l'outil électrique en énergie ;
un moteur électrique (150) disposé dans le boîtier et comprenant un ensemble de stator (151) et un ensemble de rotor (152) ;
une carte pilote (160) comprenant une couche de circuit (161) et une couche isolante (162), dans laquelle une pluralité de commutateurs semi-conducteurs sont disposés sur la couche de circuit, et dans laquelle un circuit pilote (200) formé par la pluralité de commutateurs semi-conducteurs est électriquement connecté au dispositif de stockage d'énergie ; et
une unité de commande (220) configurée pour commander la mise en conduction et hors conduction de la pluralité de commutateurs semi-conducteurs afin d'ajuster l'alimentation en énergie du dispositif de stockage d'énergie vers le moteur électrique ;
**caractérisé en ce que**
la carte pilote comprend une couche de base métallique (163),
dans laquelle l'ensemble de stator est directement connecté à la couche de base métallique au moyen d'un fil (300).

2. L'outil électrique selon la revendication 1, dans lequel la couche de base métallique est réalisée en aluminium.

3. L'outil électrique selon la revendication 1, dans lequel l'ensemble de stator est connecté à la couche de base métallique sans dispositif antiparasite (310).

4. L'outil électrique selon la revendication 1, dans lequel deux extrémités du fil sont directement connectées respectivement à l'ensemble de stator et à la couche de base métallique afin de réduire les interférences rayonnées du moteur électrique.

5. L'outil électrique selon la revendication 1, dans lequel le moteur électrique est un rotor interne, et le fil est connecté à un noyau de stator (1511) de l'ensemble de stator.

6. L'outil électrique selon la revendication 1, dans lequel le moteur électrique est un rotor externe, et le fil est connecté à un capuchon de stator (1512) de l'ensemble de stator.

7. L'outil électrique selon la revendication 1, dans lequel l'outil électrique est un outil de jardin à roues.

8. L'outil électrique selon la revendication 1, dans lequel un diamètre du moteur électrique est supérieur ou égal à 60 mm.

9. L'outil électrique selon la revendication 1, dans lequel une vitesse de rotation nominale du moteur électrique est supérieure ou égale à 2000 rpm.

10. L'outil électrique selon la revendication 1, dans lequel une tension du dispositif de stockage d'énergie est supérieure ou égale à 18 V.

11. L'outil électrique selon la revendication 1, dans lequel la pluralité de commutateurs semi-conducteurs est dans un boîtier transistor outline leadless (TOLL).

12. L'outil électrique selon la revendication 11, dans lequel une longueur et une largeur d'un seul de la pluralité de commutateurs semi-conducteurs sont toutes deux supérieures ou égales à 9 mm.

13. L'outil électrique selon la revendication 11, dans lequel une épaisseur d'un seul de la pluralité de commutateurs semi-conducteurs est inférieure ou égale à 3 mm.

14. L'outil électrique selon la revendication 1, comprenant en outre un dissipateur thermique métallique (164) connecté à la couche de base métallique.

15. L'outil électrique selon la revendication 14, dans lequel une couche conductrice thermique (165) est disposée entre le dissipateur thermique métallique et la couche de base métallique.
